# EUROPÄISCHE PATENTSCHRIFT

(11) **EP 1 675 310 B1**
(45) Veröffentlichungstag und Bekanntmachung des Hinweises auf die Patenterteilung: **04.04.2007**
(21) Anmeldenummer: 04030366.1
(22) Anmeldetag: 21.12.2004
(51) Int. Cl.: H04L 12/40

(54) **Datenübertragungsverfahren und Datenbussystem für ein Automobil**
Method for datacommunication and data bus system for automobile
Procédé de communication des données et système bus des données pour automobile

(43) Veröffentlichungstag der Anmeldung: 28.06.2006
(73) Patentinhaber: Delphi Technologies, Inc., Troy, MI 48007 (US)
(72) Erfinder: Altrogge, Rainer, 50997 Köln (DE); Rosenthal, Thorsten, 45473 Mülheim (DE); Hupertz, Stefan, 57462 Olpe (DE); Hombach, Frank, 51674 Wiehl (DE)
(74) Vertreter: Manitz, Finsterwald & Partner GbR

(56) Entgegenhaltungen:
- EP-A- 0 246 666
- DE-A1- 19 938 900
- US-A- 4 739 324
- US-B1- 6 256 557

## Beschreibung

Die Erfindung betrifft ein Datenübertragungsverfahren und ein Datenbussystem zur Übertragung von Daten zwischen einer Steuereinheit und zumindest einer externen Peripheriekomponente.

Speziell im automobilen Bereich werden zur Übertragung von Daten zwischen einer Steuereinheit und einer externen Peripheriekomponente z.B. parallele Feldbussysteme eingesetzt. Mit externen Peripheriekomponenten werden hier externe Elemente bezeichnet, die sich nicht auf einer Platine ("on-board") mit der Steuereinheit befinden, also z. B. Messfühler oder Stellglieder. Dabei wird von der Steuereinheit je ein Kabel zu einer externen Peripheriekomponente gezogen. Gerade bei der zunehmenden Automatisierung im automobilen Bereich wächst dabei der Verkabelungsaufwand aufgrund der großen Anzahl von Ein-/Ausgabepunkten sehr stark. Dadurch ist großer Aufwand bei Installation, Inbetriebnahme und Wartung notwendig.

Zur Kostenverringerung wird daher oftmals ein serielles System eingesetzt. Um eine sichere Datenübertragung mit externen Komponenten, also nicht nur auf einer Platine, zu ermöglichen, werden dabei asynchrone, serielle Bussysteme verwendet, die Daten in Form von frames unter vorgegebenen Protokollen übertragen. Im jeweiligen Empfänger ist ein Prozessor vorgesehen, der zur Aufnahme, Decodierung und Umsetzung des seriell übertragenen Signals dient. Insbesondere werden asynchrone CAN-(controller area network-)Busse oder LIN-(local interconnect network-) Busse eingesetzt.

Ein Datenübertragungsverfahren mit den Merkmalen des Oberbegriffes des Anspruches 1 ist aus EP 0 246 666 A2 bzw. US 4,739,324 bekannt.

Es ist die Aufgabe der vorliegenden Erfindung, ein einfaches und kostengünstiges Datenübertragungsverfahren bzw. Datenbussystem zur Verfügung zu stellen, das insbesondere für den automobilen Bereich geeignet ist.

Diese Aufgabe wird mit einem Verfahren zur Datenübertragung mit den Merkmalen des Anspruchs 1 und einem Datenbussystem mit den Merkmalen des Anspruchs 10 gelöst.

Bei dem erfindungsgemäßen Verfahren wird ein synchroner, serieller Bus, insbesondere ein SPI-Bus (Serial Peripheral Interface-Bus) eingesetzt. Die Datenübertragung geschieht synchronisiert auf einer Dateninput- und einer Datenoutputleitung. Außerdem wird ein Taktsignal übertragen, um die Synchronisierung zu ermöglichen. Zur Auswahl einzelner externer Komponenten wird ein Auswahlsignal (Chip-Select-Signal) übermittelt.

Durch das Auswahlsignal wird die externe Peripheriekomponente ausgewählt und steht für den Datenempfang bereit. Im Takt des Taktsignals überträgt bzw. empfängt die Steuereinheit Daten zu bzw. von der externen Peripheriekomponente, ohne dass hierzu ein komplexes Protokoll festgelegt werden müsste.

Mit dem erfindungsgemäßen Verfahren bzw. mit dem erfindungsgemäßen Bussystem speziell unter Verwendung eines SPI-Busses ist also eine sehr einfache und unkomplizierte Datenübertragung möglich. Es ist kein Prozessor beim Empfänger notwendig, wodurch die Architektur des Systems weiter vereinfacht wird. Die Daten werden nicht in Form eines komplizierten Protokolls übertragen, so dass auch die Auswertung einfach ist.

Bei dem erfindungsgemäßen Verfahren wird das Taktsignal mit einem Signalhub übertragen, der höher ist als der übliche TTL-Pegel der Steuereinheit. In der Regel beträgt der TTL-Pegel 5 V. Eine Erhöhung dieses Werts, z.B. auf die Fahrzeugspannung eines Kraftfahrzeugs (z.B. 12 V) vergrößert den Störabstand und damit die Toleranz gegenüber Fehlern. Die Signalübertragung ist damit z.B. gegen Spannungsschwankungen weniger anfällig. Gerade im automobilen Bereich ergibt sich ein weiterer Sicherheitsvorteil dadurch, dass das Leitungssystem des Busses mit 12 V betrieben werden kann. Ein Kurzschluss oder eine Fehlfunktion im Fahrzeug, die möglicherweise eine 12 V-Spannung in unbeabsichtigter Weise an eine Datenbusleitung anlegt, führt bei einem System dieser Ausführungsform nicht zur Überlastung der Busleitung. Eine Leitung, die nur zur Übertragung von einer Spannung gemäß dem TTL-Pegel ausgelegt ist, würde dabei hingegen möglicherweise zerstört. Besonders vorteilhaft ist der Einsatz eines Signalhubs, der der Fahrzeugspannung entspricht, da diese bereits als Spannungswert vorliegt.

Eine weitere Vereinfachung und kostengünstigere Ausgestaltung des Systems ermöglicht eine Verfahrensführung, bei der zur Auswahl einer Peripheriekomponente ein Auswahlsignal auf einer Leitung des Bussystems verwendet wird und zur Synchronisation der Datenübertragung auf derselben Leitung ein Taktsignal übermittelt wird. Diese Leitung, die z. B. durch einen einzelnen Draht zu jeder externen Peripheriekomponente gebildet wird, wird im folgenden auch als Kombinationsleitung bezeichnet Die Verwendung von nur einer gemeinsamen Leitung für das Auswahlsignal zur Auswahl der externen Peripheriekomponente und des Taktsignals spart eine Leitung und damit einen Kabelzug. Ist die externe Peripheriekomponente einmal ausgewählt, muss auf dieser Busleitung kein Auswahlsignal mehr versendet werden, so dass diese Leitung für das Taktsignal zur Verfügung steht.

Besonders vorteilhaft ist es, wenn im Ruhezustand des Systems an der Kombinationsleitung eine Offsetspannung anliegt. Eine einfache Ausgestaltung verwendet den halben Signalhub des Taktsignals als Offsetspannung. Bei einer Fahrzeugspannung von z.B. 12 V und einem entsprechend eingestellten Signalhub des Taktsignals wird als Offsetspannung also ein 6 V Signal eingesetzt.

Das Anliegen einer Offsetspannung an der Kombinationsleitung zwischen Steuereinheit und externer Peripheriekomponente auch im Ruhezustand ermöglicht auf einfache Weise eine Prüfung der Leitungen. Dazu kann z.B. das Offsetsignal vom externen Element durch eine Datenleitung zurück zur Steuereinheit gesendet werden. Wird von dieser das derart zurückgespiegelte Offsetsignal nicht mehr empfangen, liegt ein Leitungsbruch vor.

Bei einer Ausgestaltung des erfindungsgemäßen Verfahrens wird als Auswahlsignal die Offsetspannung auf Null gesetzt. Das System ist also ein "Active-Low"-System. Sobald die externe Peripheriekomponente registriert, dass keine Offsetspannung mehr anliegt, ist sie aktiv und für den Datenempfang bereit.

Bei einer anderen Ausgestaltung wird als Auswahlsignal eine Erhöhung der Offsetspannung auf den vollen Signalhub des Taktsignals eingesetzt. Es handelt sich dabei um ein "Active-High"-System. Sobald die externe Peripheriekomponente das volle Spannungssignal empfängt, ist sie für den Datenempfang bereit.

Ein erfindungsgemäßes Datenbussystem weist einen synchronen, seriellen Datenbus, insbesondere einen SPI-Bus auf.

Das erfindungsgemäße Datenbussystem umfasst eine Treiberschaltung an der Steuereinheit zur Erhöhung des von der Steuereinheit verwendeten TTL-Pegels auf einen Betriebsspannung, z. B. den üblichen Spannungswert eines Fahrzeugsystems, also z. B. 12 V.

Eine besondere Ausführungsform weist jeweils eine Kombinationsleitung zwischen der Steuereinheit und jeder externen Peripheriekomponente zur Übermittlung des Auswahlsignals und eines Taktsignals zur Synchronisierung der Datenübertragung auf.

Das Verfahren und das System sind überall dort vorteilhaft einsetzbar, wo eine Kommunikation zwischen einer Steuereinheit und externen Peripheriekomponenten notwendig ist, die nicht auf derselben Platine wie die Steuereinheit angeordnet sind. Es können mehrere externe Peripheriekomponenten einbezogen sein, wobei dann von der Steuereinheit zu jeder externen Peripheriekomponente eine Kombinationsleitung zur Übertragung des jeweiligen Auswahlsignals und des Taktsignals vorgesehen wird. Ebenso können das erfindungsgemäße Verfahren und das erfindungsgemäße Bussystem auch für die Kommunikation von einer Steuereinheit und nur einer externen Peripheriekomponente eingesetzt werden. Besonders vorteilhaft ist der Einsatz im automobilen Bereich, da hier die Einsparung an Systemkomponenten und die Vereinfachung der Datenübertragung von großer Bedeutung ist.

Eine Ausgestaltung der Erfindung wird anhand der beiliegenden Figuren im Detail erläutert. Dabei zeigt:
- Fig. 1: eine schematische Darstellung eines erfindungsgemäßen Datenbussystems zur Kommunikation von zwei externen Peripheriekomponenten mit einer Steuereinheit, und
- Fig. 2: eine schematische Darstellung der Signalübertragung auf der Kombinationsleitung zwischen der Steuereinheit und einer der externen Peripheriekomponenten.

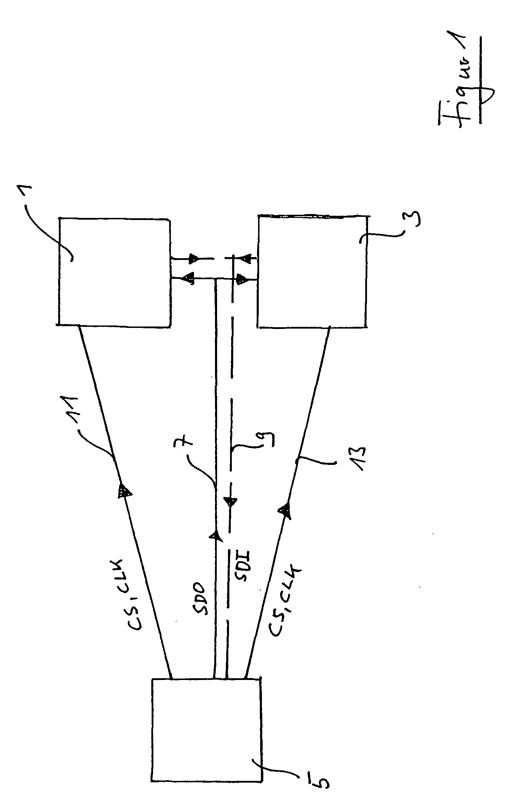

Das in Fig. 1 schematisch dargestellte System dient zur Übertragung von Daten zwischen einer Steuereinheit 5 und externen Peripheriekomponenten 1 und 3, z. B. Messfühlern oder Stellgliedern. Daten von der Steuereinheit werden auf der SDO-Leitung (Serial Data Output) 7 zu den externen Peripheriekomponenten 1 bzw. 3 übertragen. Auf der SDI-Leitung (Serial Data Input) 9 werden Signale von den externen Peripheriekomponenten 1, 3 zur Steuereinheit 5 übermittelt. Die Datenübertragung geschieht seriell. Zwischen Steuereinheit 5 und jeder der Peripheriekomponenten 1 bzw. 3 ist eine Kombinationsleitung 11 bzw. 13 vorgesehen, die der Auswahl der jeweiligen externen Peripheriekomponente durch ein Auswahlsignal CS und zur Übertragung des Synchronisierungstaktsignals CLK dienen. Die Kombinationsleitung 11, 13 besteht jeweils aus nur einem Draht.

Die Steuereinheit 5 weist eine Treiberschaltung auf, die den normalen TTL-Pegel von 5 V, mit der die Steuereinheit betrieben wird, auf die Fahrzeugspannung von 12 V erhöht.

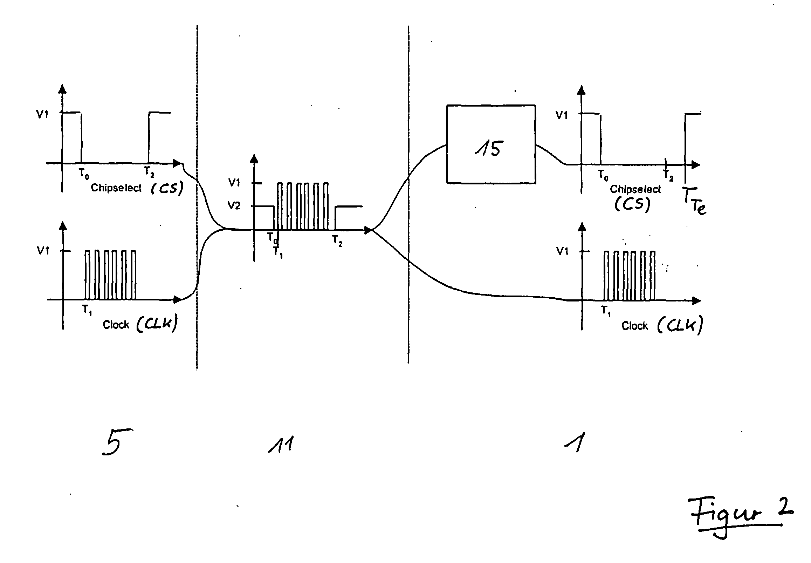

Fig. 2 beschreibt die Verwendung eines solchen Systems und den dabei eingesetzten Signalverlauf am Beispiel der Kombinationsleitung 11. Die Ziffern im unteren Bereich der Fig. 2 entsprechen den Bezugsziffern der Fig. 1. Von der Steuereinheit 5 werden die Signale "Chip Select" und "Clock" kombiniert. Im Ruhezustand (also für Zeiten kleiner T₀ bzw. Zeiten größer T₂) wird ein Offsetsignal des Spannungswertes V2 erzeugt und an die Kombinationsleitung 11 angelegt. Das Offsetsignal entspricht der halben Fahrzeugspannung, beträgt also 6 V. Für Zeiten kleiner T₀ und größer T₂ wird diese Offsetspannung aus der 12 V Fahrzeugspannung V1 generiert. Sobald die Peripheriekomponente 1 ausgewählt werden soll, wird das an der entsprechenden Leitung 11 anliegende Offsetsignal auf 0 V herabgesetzt. Zum Zeitpunkt T₁ wird das Taktsignal "Clock" gestartet, das den vollen Signalhub der Fahrzeugspannung V 1 = 12 V verwendet. Aus dem Negieren der Offsetspannung zum Zeitpunkt T₀ kann die externe Peripheriekomponente den Beginn ihres eigenen Chip-Select-Signals ablesen. Das ursprüngliche Chip-Select-Signal in Höhe V1 wird in der externen Peripheriekomponente wieder neu erzeugt. Dazu kann z.B. ein hardwaremäßig implementiertes Zeitelement 15 eingesetzt werden, das durch die fallende Flanke des Offsetsignals von 6 V auf 0 V getriggert wird. Das in der externen Peripheriekomponente 1 erzeugte Chip-Select-Signal ist daher nicht identisch zu dem ursprünglichen Chip-Select-Signal und wird bis zum Zeitpunkt T_{TE} verlängert.

Es ist also mit nur jeweils einer Verbindung zwischen Steuereinheit 5 und dem der externen Peripheriekomponente 1, 3 über jeweils eine Leitung 11, 13 sowohl das Chip-Select-Signal CS als auch das Synchronisierungstaktsignal CLK zu übermitteln. Zwischen der Steuereinheit 5 und der jeweiligen Peripheriekomponente 1, 3 ist also für diese beiden Funktionen jeweils nur eine Leitung 11, 13 notwendig.

Dabei steht für die Übertragung des Taktsignals CLK zur Synchronisierung der volle Signalhub V1 von 12 V der Fahrzeugspannung zur Verfügung, so dass ein großer Störabstand gegeben ist.

In der Peripheriekomponente 1, 3 wird das Offsetsignal der Höhe V2 im Ruhezustand z. B. in die Datenleitung 9, die in Fig. 2 nicht gezeigt ist, zurückgespiegelt. Wird im Ruhezustand das an dieser Leitung 9 zurückgespiegelte Signal von der Steuereinheit 5 nicht mehr registriert, so liegt ein Fehler, z.B. ein Leitungsbruch vor.

Das erfindungsgemäße Übermittlungsverfahren und das erfindungsgemäße Datenbussystem ermöglichen also eine vorteilhafte Erhöhung der Übertragungssicherheit.

## Patentansprüche

1. Datenübertragungsverfahren zur Übertragung von Daten zwischen einer Steuereinheit (5) und zumindest einer externen Peripheriekomponente (13), wobei zumindest ein synchroner, serieller Datenbus (SD1, SD0) eingesetzt wird,
**dadurch gekennzeichnet, dass**
das Taktsignal (CLK) des Datenbusses (SD1, SD0) zur Synchronisation der Datenübertragung mit einem Signalhub (V1) übertragen wird, der höher als der TTL-Pegel der Steuereinheit ist.

2. Datenübertragungsverfahren nach Anspruch 1,
**dadurch gekennzeichnet, dass**
ein serial peripheral interface Bus eingesetzt wird, welches im weiteren als SPI bezeichnet wird.

3. Datenübertragungsverfahren nach einem der Ansprüche 1 oder 2,
**dadurch gekennzeichnet, dass**
der Signalhub (V1) des Taktsignals der Fahrzeugspannung eines Automobils, insbesondere 12 Volt, entspricht.

4. Datenübertragungsverfahren nach einem der Ansprüche 1 bis 3,
**dadurch gekennzeichnet, dass**
zur Auswahl einer externen Peripheriekomponente (1, 3) zu dieser externen Peripheriekomponente ein Auswahlsignal (CS) auf einer Leitung (11, 13) des Busses versendet wird und zur Synchronisation der Datenübertragung auf derselben Leitung (11, 13) ein Taktsignal (CLK) übermittelt wird.

5. Datenübertragungsverfahren nach Anspruch 4,
**dadurch gekennzeichnet, dass**
an der Leitung (11, 13) zur Übertragung des Auswahlsignals (CS) und des Taktsignals (CLK) im Ruhezustand ein Offsetspannungssignal (V2) anliegt.

6. Datenübertragungsverfahren nach Anspruch 5,
**dadurch gekennzeichnet, dass**
die Offsetspannung (V2) dem halben Signalhub (V1) des Taktsignals entspricht.

7. Datenübertragungsverfahren nach einem der Ansprüche 5 oder 6,
**dadurch gekennzeichnet, dass**
zur Auswahl einer externen Peripheriekomponente (1, 3) ein Auswahlsignal (CS) durch Setzen der Offsetspannung auf Null oder Verdoppeln der Offsetspannung auf einen Wert entsprechend dem vollen Signalhub (V1) gesendet wird.

8. Datenübertragungsverfahren nach einem der Ansprüche 1 bis 7,
**dadurch gekennzeichnet, dass**
während des Ruhezustandes durch Überwachung der Übertragung der Offsetspannung (V2) die Funktionsfähigkeit der Leitung (11, 13) zur Übertragung des Auswahlsignals (CS) und des Taktsignals (CLK) geprüft wird.

9. Datenübertragungsverfahren nach Anspruch 8,
**dadurch gekennzeichnet, dass**
im Ruhezustand das Offsetspannungssignal in eine Datenleitung (9) zurückgespiegelt wird und durch Überwachung des zurückgespiegelten Signals die Funktionsfähigkeit der Datenleitung (9) geprüft wird.

10. Datenbussystem zur Kommunikation einer Steuereinheit (5) mit zumindest einer externen Peripheriekomponente (1, 3) zur Durchführung eines Verfahrens nach Anspruch 1, mit zumindest einem synchronen, seriellen Datenbus (SD1, SD0) und einer Treiberschaltung zur Erhöhung des TTL-Pegels der Steuereinheit (5) auf einen Signalhub (VI) höher als der TIL-Pegel.

11. Datenbussystem nach Anspruch 10, mit einer Treiberschaltung zur Erhöhung des TTL-Pegels der Steuereinheit (5) auf eine Fahrzeugspannung.

12. Datenbussystem nach einem der Ansprüche 10 oder 11, bei dem der synchrone, serielle Bus einen SPI Bus umfasst.

13. Datenbussystem nach einem der Ansprüche 10 bis 12, bei dem die Verbindung zwischen der zumindest einen externen Peripheriekomponente (1, 3) und der Steuereinheit (5) zumindest eine Dateninputleitung (7), zumindest eine Datenoutputleitung (9) und jeweils eine Kombinationsleitung (11, 13) zur Übermittlung sowohl eines Auswahlsignals (CS) von der Steuereinheit (5) zu der externen Peripheriekomponente (1, 3) als auch eines Taktsignals (CLK) zur Synchronisation der Datenübertragung umfasst.

14. Datenbussystem nach einem der Ansprüche 10 bis 13, mit einer Einrichtung zur Erzeugung eines Offsetspannungssignals einer vorbestimmten Höhe (V2) an der jeweiligen Kombinationsleitung (11, 13) zu jeder externen Peripheriekomponente (1, 3), die geringer als die Betriebsspannung (V1) ist.

15. Datenbussystem nach Anspruch 14, bei dem die Einrichtung zur Erzeugung einer vorbestimmten Offsetspannungssignales derart ausgelegt ist, dass die Offsetspannung (V2) der halben Betriebsspannung (V1) entspricht.

16. Datenbussystem nach einem der Ansprüche 14 oder 15, mit einer Einrichtung zur Rücksendung des Offsetspannungssignals von der zumindest einen externen Peripheriekomponente (1, 3) zur Steuereinheit (5) und einer Einrichtung zur Überwachung des rückgesendeten Signals.

17. Verwendung eines Datenübertragungsverfahrens nach einem der Ansprüche 1 bis 9 oder eines Datenbussystems nach einem der Ansprüche 10 bis 16 zur Datenübertragung im automobilen Bereich.

## Claims

1. A data transfer method for the transfer of data between a control unit (5) and at least one external peripheral component (13), wherein at least one synchronous, serial data bus (SDI, SDO) is used,
**characterized in that**
the clock signal (CLK) of the data bus (SDI, SDO) is transmitted for the synchronization of the data transfer with a signal excursion (V1) which is higher than the TTL level of the control unit.

2. A data transfer method in accordance with claim 1, **characterized in that** a serial peripheral interface bus is used, which is termed an SPI in the following.

3. A data transfer method in accordance with one of claims 1 or 2, **characterized in that** the signal excursion (V1) of the clock signal corresponds to the vehicle voltage of an automobile, in particular to 12 volts.

4. A data transfer method in accordance with any one of the claims 1 to 3, **characterized in that**, for the selection of an external peripheral component (1, 3), a selection signal (CS) is transmitted to this external peripheral component on a line (11, 13) of the bus and a clock signal (CLK) is transmitted on the same line (11, 13) for the synchronization of the data transfer.

5. A data transfer method in accordance with claim 4, **characterized in that** an offset voltage signal (V2) is applied to the line (11, 13) for the transfer of the selection signal (CS) and of the clock signal (CLK) in the state of rest.

6. A data transfer method in accordance with claim 5, **characterized in that** the offset voltage (V2) corresponds to half the signal excursion (V1) of the clock signal.

7. A data transfer method in accordance with one of the claims 5 or 6, **characterized in that** a selection signal (CS) is transmitted for the selection of an external peripheral component (1, 3) by setting the offset voltage to zero or doubling the offset voltage to a value corresponding to the full signal excursion (V1).

8. A data transfer method in accordance with any one of the claims 1 to 7, **characterized in that** the function capability of the line (11, 13) for the transfer of the selection signal (CS) and of the clock signal (CLK) is checked during the state of rest by monitoring the transfer of the offset voltage (V2).

9. A data transfer method in accordance with claim 8, **characterized in that** the offset voltage signal is reflected back into a data line (9) in the state of rest and the functional capability of the data line (9) is checked by monitoring the signal reflected back.

10. A data bus system for the communication of a control unit (5) with at least one external peripheral component (1, 3) for the carrying out of a method in accordance with claim 1, comprising at least one synchronous, serial data bus (SDI, SDO) and a driver circuit for the increase of the TTL level of the control unit (5) to a signal excursion (V1) higher than the TTL level.

11. A data bus system in accordance with claim 10, comprising a driver circuit for the increase of the TTL level of the control unit (5) to a vehicle voltage.

12. A data bus system in accordance with one of the claims 10 or 11, in which the synchronous, serial bus comprises an SPI bus.

13. A data bus system in accordance with any one of the claims 10 to 12, wherein the connection between the at least one external peripheral component (1, 3) and the control unit (5) includes at least one data input line (7), at least one data output line (9) and one respective combination line (11, 13) for the transmission of both a selection signal (CS) from the control unit (5) to the external peripheral component (1, 3) and of a clock signal (CLK) for the synchronization of the data transfer.

14. A data bus system in accordance with any one of the claims 10 to 13, comprising a device for the generation of an offset voltage signal of a pre-determined level (V2) at the respective combination line (11, 13) to each external peripheral component (1, 3) which is lower than the operational voltage (V1).

15. A data bus system in accordance with claim 14, wherein the device for the generation of a pre-determined offset voltage signal is designed such that the offset voltage (V2) corresponds to half the operational voltage (V1).

16. A data bus system in accordance with any one of the claims 14 or 15, comprising a device for the sending back of the offset voltage signal from the at least one external peripheral component (1, 3) to the control unit (5) and to a device for the monitoring of the signal sent back.

17. Use of a data transfer system in accordance with any one of the claims 1 to 9 or of a data bus system in accordance with any one of the claims 10 to 16 for data transfer in the automotive sector.

## Revendications

1. Procédé de transmission de données pour la transmission de données entre une unité de commande (5) et au moins un composant périphérique externe (1, 3), dans lequel on utilise au moins un bus de données synchrone, sériel (SDI, SDO), **caractérisé en ce que** le signal d'horloge (CLK) du bus de données (SDI, SDO) servant à la synchronisation de la transmission de données est transmis avec un niveau de signal (V1) qui est plus élevée que le niveau TTL de l'unité de commande.

2. Procédé de transmission de données selon la revendication 1, **caractérisé en ce qu'**on utilise un bus d'interface périphérique série qui sera appelé ci-dessous SPI.

3. Procédé de transmission de données selon une des revendications 1 ou 2, **caractérisé en ce que** le niveau de signal (VI) du signal d'horloge correspond à la tension de véhicule d'une automobile, en particulier 12 V.

4. Procédé de transmission de données selon une des revendications 1 à 3, **caractérisé en ce que** pour la sélection d'un composant périphérique externe (1, 3), un signal de sélection (CS) est adressé à ce composant périphérique externe sur une ligne (11, 13) du bus, et pour la synchronisation de la transmission des données, un signal d'horloge (CLK) est transmis sur cette même ligne (11, 13).

5. Procédé de transmission de données selon la revendication 4, **caractérisé en ce que** qu'un signal de tension de décalage (V2) est présent au repos au niveau de la ligne (11, 13) de transmission du signal de sélection (CS) et du signal d'horloge (CLK).

6. Procédé de transmission de données selon la revendication 5, **caractérisé en ce que** la tension de décalage (V2) correspond à la moitié du niveau de signal (V1) du signal d'horloge.

7. Procédé de transmission de sonnées selon une des revendications 5 ou 6, **caractérisé en ce que** pour la sélection d'un composant périphérique externe (1, 3) on envoie un signal de sélection (CS) en mettant la tension de décalage à zéro ou en doublant la tension de décalage à une valeur correspondant à la totalité du niveau de signal (V1).

8. Procédé de transmission de données selon une des revendications 1 à 7, **caractérisé en ce qu'**au repos, la capacité de fonctionnement de la ligne (11, 13) de transmission du signal de sélection (CS) et du signal d'horloge (CLK) est vérifiée en surveillant la transmission de la tension de décalage (V2).

9. Procédé de transmission de données selon la revendication 8, **caractérisé en ce qu'**au repos, le signal de tension de décalage est réfléchi dans une ligne de données (9), et la capacité de fonctionnement de la ligne de données (9) est vérifiée en surveillant le signal réfléchi.

10. Système de bus de données pour la communication entre une unité de commande (5) et au moins un composant périphérique externe (1, 3) pour la mise en oeuvre d'un procédé selon la revendication 1, comportant au moins un bus de données synchrone sériel (SDI, SDO) et un circuit d'attaque pour élever le niveau TTL de l'unité de commande (5) à un niveau de signal (V1) plus élevée que le niveau TTL.

11. Système de bus de données selon la revendication 10, comportant un circuit d'attaque pour élever le niveau TTL de l'unité de commande (5) à la tension d'un véhicule.

12. Système de bus de données selon un des revendications 10 ou 11, dans lequel le bus synchrone sériel comprend un bus SPI.

13. Système de bus de données selon une des revendications 10 à 12, dans lequel la connexion entre le au moins un périphérique externe (1, 3) et l'unité de commande (5) comprend au moins une ligne d'entrée de données (7), au moins une ligne de sortie de données (9) et une ligne combinée (11, 13) pour la transmission à la fois du signal de sélection (CS) de l'unité de commande (5) vers le composant périphérique externe (1, 3) et du signal d'horloge (CLK) pour la synchronisation de la transmission de données.

14. Système de bus de données selon une des revendications 10 à 13, comportant un dispositif de génération d'un signal de tension de décalage d'une hauteur (V2) prédéterminée qui est moins élevée que la tension de service (V1) au niveau de la ligne combinée respective (11, 13) vers chaque composant périphérique externe (1, 3).

15. Système de bus de données selon la revendication 14, dans lequel le dispositif de génération d'un signal de tension de décalage prédéterminé est conçu de telle manière que la tension de décalage (V2) correspond à la moitié de la tension de service (V1).

16. Système de bus de données selon une des revendications 14 ou 15, comportant un dispositif servant à retourner le signal de tension de décalage d'au moins un composant périphérique externe (1, 3) vers l'unité de commande (5), et un dispositif servant à surveiller le signal retourné.

17. Utilisation d'un procédé de transmission de données selon une des revendications 1 à 9 ou d'un système de bus de données selon une des revendications 10 à 16 pour la transmission de données dans le domaine de l'automobile.
